# EUROPÄISCHE PATENTSCHRIFT

(11) **EP 4 328 158 B1**
(45) Veröffentlichungstag und Bekanntmachung des Hinweises auf die Patenterteilung: **13.08.2025**
(21) Anmeldenummer: 23179089.0
(22) Anmeldetag: 14.06.2023
(51) Int. Cl.: B65G 33/08, B65G 33/26, B65G 53/46, B65G 53/48

(54) **VORRICHTUNG ZUM FÖRDERN VON STÜCKIGEM BRENNSTOFF**
DEVICE FOR CONVEYING LUMP FUEL
DISPOSITIF POUR TRANSPORTER DU COMBUSTIBLE EN MORCEAUX

(30) Priorität: 15.06.2022 AT 504272022
(43) Veröffentlichungstag der Anmeldung: 28.02.2024
(73) Patentinhaber: SOLARFOCUS Holding GmbH, 4451 Garsten (AT)
(72) Erfinder: Kalkgruber, Johann, 4421 Aschach an der Steyr (AT); Großauer, Johann, 4421 Aschach an der Steyr (AT); Hinterplattner, Johann, 4423 Neuzeug (AT)
(74) Vertreter: Burgstaller, Peter

(56) Entgegenhaltungen:
- AT-B- 411 388
- DE-C- 870 223
- RU-C1- 2 726 499

## Beschreibung

Die Erfindung betrifft eine Vorrichtung zum Fördern von stückigem Brennstoff mit einer in einem Schneckengehäuse gelagerten Förderschnecke und mit einer an eine Austragsöffnung im Bereich des austragsseitigen Endes des Schneckengehäuse angeschlossenen Brennstoffschleuse, die aus einem zylindrischen, umfangsseitig einen Brennstoffauslass bildenden Schleusengehäuse und aus einem im Schleusengehäuse gelagerten Zellenrad besteht, dessen Zellen mit Ein- bzw. Auslassöffnungen zum Anschluss der Zellen einerseits an die Austragsöffnung des Schneckengehäuses und anderseits an den Brennstoffauslass des Schleusengehäuses versehen sind.

Eine solche Vorrichtung ist aus der AT411388B bekannt, wobei bei dieser Vorrichtung das Schleusengehäuse das austragsseitige Ende des Schneckengehäuses koaxial umschließt, wobei das im Ringraum zwischen dem Schneckengehäuse und dem Schleusengehäuse angeordnete Zellenrad mit einem das Schneckengehäuse durchsetzenden Wellenstummel der Förderschnecke antriebsverbunden ist und wobei die Zellen des Zellenrades jeweils eine innere, gegen das Schneckengehäuse offene Einlassöffnung und eine äußere, gegen das Schleusengehäuse offene Auslassöffnung aufweisen. Die koaxiale Anordnung der Förderschnecke und des Zellenrades erlaubt in einfacher Weise den Antrieb des Zellenrades über einen das Schneckengehäuse durchsetzenden Wellenstummel der Förderschnecke. Die konstruktive Ausführung des Zellenrades der AT411388B umfasst, dass das Zellenrad aus zwei Stirnwänden und aus zwischen diesen Stirnwänden angeordneten, die einzelnen Zellen voneinander abgrenzenden Trennwänden besteht, wobei die eine Stirnwand auf dem aus dem Schneckengehäuse axial vorstehenden Wellenstummel abgestützt ist.

Aufgabe der gegenständlichen Erfindung ist es eine verbesserte Vorrichtung bereit zu stellen.

Zur Lösung der Aufgabe wird eine Vorrichtung nach Anspruch 1 vorgeschlagen.

Ausgehend vom Stand der Technik der AT411388B wird eine Verbesserung dadurch erreicht, dass die Welle der Förderschnecke mit dem Zellenrad verbunden ist und sich ein Wellenstummel des Zellenrades durch dessen Gehäuse erstreckt. Vorteilhaft ist, dass dadurch die Hindurchführung der Schneckenwelle durch das Zellenrad und das Zellenradgehäuse entfällt, sodass dieser potenzielle Pfad für Verschmutzungen und Ablagerungen verschlossen ist.

Die erfindungsgemäße Ausführungsvariante sieht eine Vorrichtung zum Fördern von stückigem Brennstoff vor, mit einer in einem Schneckengehäuse angeordneten Förderschnecke und mit einer an eine Austragsöffnung im Bereich des austragsseitigen Endes des Schneckengehäuses angeschlossenen Brennstoffschleuse, die aus einem Schleusengehäuse und aus einem im Schleusengehäuse angeordneten Zellenrad besteht, wobei das Zellenrad einen ersten scheibenförmigen Bereich aufweist, von welchem sich mehrere radial verteilte Elemente zu einem zweiten scheibenförmigen Bereich erstrecken, wobei der zweite scheibenförmigen Bereich axial offen ist, um einen Durchtritt für das Schneckengehäuse zu bilden, wobei das Zellenrad einen Wellenfortsatz aufweist, welcher durch das Schleusengehäuse ragt und in diesem gelagert ist, wobei die Förderschnecke drehfest am Zellenrad befestigt ist.

Der erste scheibenförmige Bereich des Zellenrads ist axial geschlossen.

Ausgehend vom Stand der Technik der AT411388B kann eine weitere Verbesserung dadurch erreicht werden, dass das Zellenrad ein einstückiges Spezialbauteil ist. Vorteilhaft ist, dass die Fertigungsgenauigkeit und Standfestigkeit gegenüber einem aus mehreren Teilen zusammengeschweißtem Zellenrad erhöht ist.

Eine bevorzugte Ausführungsvariante sieht somit eine Vorrichtung vor, zum Fördern von stückigem Brennstoff mit einer in einem Schneckengehäuse angeordneten Förderschnecke und mit einer an eine Austragsöffnung im Bereich des austragsseitigen Endes des Schneckengehäuses angeschlossenen Brennstoffschleuse, die aus einem Schleusengehäuse und aus einem im Schleusengehäuse angeordneten Zellenrad besteht, wobei das Zellenrad ein monolithisches Bauteil ist, welches einen ersten scheibenförmigen Bereich aufweist, von welchem sich mehrere radial verteilte Elemente in axialer Richtung zu einem zweiten scheibenförmigen Bereich erstrecken, wobei der zweite scheibenförmigen Bereich axial offen ist, um einen Durchtritt für das Schneckengehäuse zu bilden, wobei sich das Schneckengehäuse bis zwischen die radial verteilten Elemente erstreckt.

Bevorzugt wird dabei, dass die mehreren radial verteilten Elemente durch spanende Bearbeitung aus einem zylindrischen oder hohlzylindrischen Rohling geschnitten wurden.

Gemäß der Erfindung, ist der erste scheibenförmigen Bereich axial geschlossen.

Bevorzugt wird dabei, dass das Schneckengehäuse eine rohrförmige offene Stirnseite aufweist, welche dem ersten scheibenförmigen Bereich zugewandt liegt. Bevorzugt liegt im ersten scheibenförmigen Bereich eine Vertiefung vor, in welche das rohrförmige offene Ende des Schneckengehäuses ragt.

Ausgehend vom Stand der Technik der AT411388B kann eine Verbesserung dadurch erreicht werden, dass zumindest an der freien Stirnseite des Zellenrades ein Abstreifelement, insbesondere in Form eines Läufers, angeordnet ist. Vorteilhaft ist, dass dadurch Staub des Brennstoffs vom Zellenrad abgestreift wird, sodass Ablagerungen vermieden werden, welche eine manuelle Reinigung des Zellenrades erforderlich machen könnten.

Eine bevorzugte Ausführungsvariante sieht somit eine Vorrichtung zum Fördern von stückigem Brennstoff vor, mit einer in einem Schneckengehäuse angeordneten Förderschnecke und mit einer an eine Austragsöffnung im Bereich des austragsseitigen Endes des Schneckengehäuses angeschlossenen Brennstoffschleuse, die aus einem Schleusengehäuse und aus einem im Schleusengehäuse angeordneten Zellenrad besteht, wobei das Zellenrad einen ersten scheibenförmigen Bereich aufweist, von welchem sich mehrere radial verteilte Elemente zu einem zweiten scheibenförmigen Bereich erstrecken, wobei der zweite scheibenförmigen Bereich axial offen ist, um einen Durchtritt für das Schneckengehäuse zu bilden, wobei an der freien Stirnseite des zweiten scheibenförmigen Bereichs ein Abstreifelement vorliegt.

Bevorzugt wird dabei, dass sich das Abstreifelement über die gesamte Breite des ringförmigen freien Endes des zweiten scheibenförmigen Bereichs des Zellenrads erstreckt.

Bevorzugt wird dabei, dass das Schleusengehäuse einen Brennstoffauslass aufweist, welcher sich bis hinter den zweiten scheibenförmigen Bereich des Zellenrads erstreckt, also bis in jenen Bereich, in welchem das Abstreifelement vorliegt.

Ausgehend vom Stand der Technik der AT411388B kann eine Verbesserung dadurch erreicht werden, dass das Schneckengehäuse an seinem freien Ende eine Aussparung aufweist, welche zusätzlich zur Austragsöffnung des Schneckengehäuses vorliegt. Die Aussparung liegt bevorzugt in Umfangsrichtung versetzt zur Austragsöffnung, insbesondere weiter oben als die Austragsöffnung. Die Aussparung liegt in Längsrichtung versetzt zur Austragsöffnung und zwar näher am freien Ende der Stirnseite des Schneckengehäuses, wobei die Aussparung bevorzugt zur freien Stirnseite des Schneckengehäuses hin offen ist. Die Austragsöffnung liegt mit Abstand zum freien Ende des Schneckengehäuses vor. Somit sind die Austragsöffnung und das bevorzugt offene freie Ende des Schneckengehäuses durch einen Abschnitt des rohrförmigen Schneckengehäuses voneinander getrennt.

Eine bevorzugte Ausführungsvariante sieht somit eine Vorrichtung zum Fördern von stückigem Brennstoff vor, mit einer in einem Schneckengehäuse angeordneten Förderschnecke und mit einer an eine Austragsöffnung im Bereich des austragsseitigen Endes des Schneckengehäuses angeschlossenen Brennstoffschleuse, die aus einem Schleusengehäuse und aus einem im Schleusengehäuse angeordneten Zellenrad besteht, wobei das Schneckengehäuse an seinem freien Ende, welches innerhalb des Zellenrades liegt eine Aussparung aufweist, welche zusätzlich zur Austragsöffnung des Schneckengehäuses vorliegt, wobei die Aussparung in Längsrichtung versetzt zur Austragsöffnung liegt und zwar näher am freien Ende des Schneckengehäuses.

Bevorzugt wird für alle Varianten, dass die mehreren radial verteilten Elemente durch spanende Bearbeitung aus einem zylindrischen oder hohlzylindrischen Rohling geschnitten wurden. Der Rohling umfasst bevorzugt zudem den ersten und zweiten scheibenförmigen Bereich des Zellenrads, sodass die scheibenförmige und die mehreren radial verteilten Elemente monolithisch verbunden sind.

Bevorzugt wird für alle Varianten, dass das Schneckengehäuse eine rohrförmige offene Stirnseite aufweist, welche dem ersten scheibenförmigen Bereich des Zellenrads zugewandt liegt. Bevorzugt liegt im ersten scheibenförmigen Bereich eine Vertiefung vor, in welche das rohrförmige offene Ende des Schneckengehäuses ragt.

Bevorzugt wird für alle Varianten, dass an der freien Stirnseite des zweiten scheibenförmigen Bereichs ein Abstreifelement vorliegt, welches über die gesamte Breite des ringförmigen freien Endes des zweiten scheibenförmigen Bereichs des Zellenrads erstreckt.

Bevorzugt wird für alle Varianten, dass das Schleusengehäuse einen Brennstoffauslass aufweist, welcher sich bis hinter den zweiten scheibenförmigen Bereich des Zellenrads erstreckt, also bis in jenen Bereich, in welchem das Abstreifelement vorliegt.

Bevorzugt wird für alle Varianten, dass das Schleusengehäuse eine erste Scheibe und eine zweite Scheibe aufweist, zwischen welchen sich ein Hohlzylinder befindet, wobei das Schneckengehäuse durch eine zentrale Öffnung der ersten Scheibe in das Innere der Brennstoffschleuse ragt.

Bevorzugt wird, dass das Schneckengehäuse fest mit der ersten Scheibe des Schleusengehäuses verbunden ist, insbesondere verklebt oder verschweißt ist.

Bevorzugt wird, dass sich der Brennstoffauslass bis zu einem Bereich erstreckt, welcher zwischen dem zweiten scheibenförmigen Bereich des Zellenrades und der ersten Scheibe des Schleusengehäuses vorliegt.

Bevorzugt wird, dass sich der Brennstoffauslass bis zu einem Bereich erstreckt, welcher zwischen dem ersten scheibenförmigen Bereich des Zellenrades und der zweiten Scheibe des Schleusengehäuses vorliegt.

Die gegenständlichen Verbesserungen werden durch Vergleich des Stands der Technik in Fig. 1 und der gegenständlichen Erfindung in den Fig. 2-5 verdeutlicht.

In den Zeichnungen 2-5 ist der Erfindungsgegenstand beispielhaft dargestellt.

Es zeigen:
- Fig. 1:: eine Vorrichtung des Stands der Technik aus AT411388B.
- Fig. 2:: zeigt einen Schnitt durch eine bevorzugte Ausführungsvariante der gegenständlichen Vorrichtung.
- Fig. 3:: zeigt Teile der bevorzugten Ausführungsvariante der gegenständlichen Vorrichtung in 3D Ansicht.
- Fig. 4:: zeigt eine Explosionsdarstellung der bevorzugten Ausführungsvariante der gegenständlichen Vorrichtung.
- Fig. 5:: zeigt Teile der bevorzugten Ausführungsvariante der gegenständlichen Vorrichtung in 3D Ansicht.

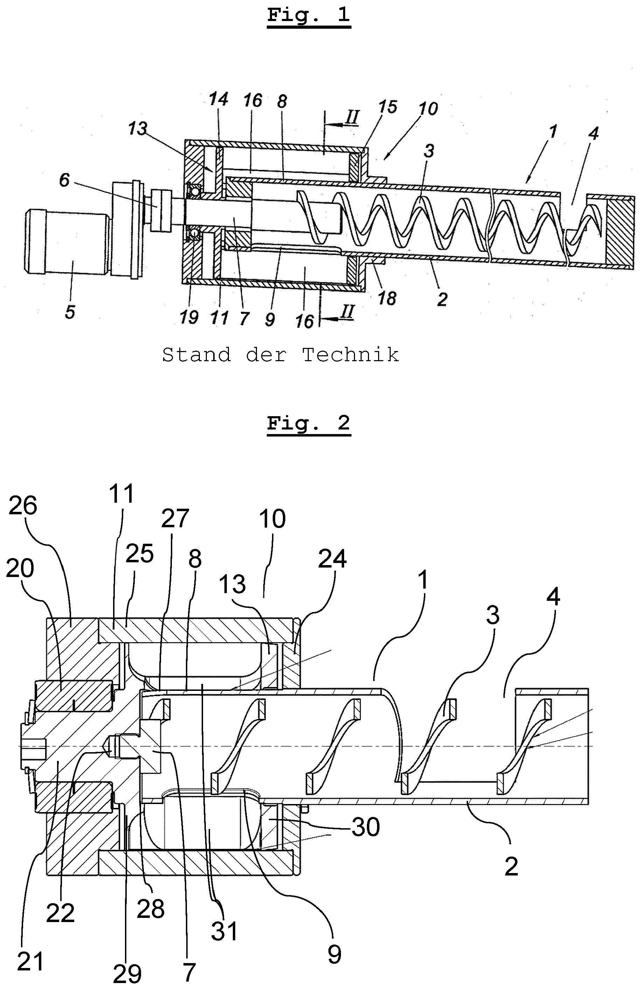

Fig. 1 zeigt eine aus dem Stand der Technik bekannte Vorrichtung zum Fördern von stückigem Brennstoff in einem schematischen Längsschnitt. Diese Vorrichtung zum Fördern von stückeligem Brennstoff weist einen Schneckenförderer 1 mit einer in einem Schneckengehäuse 2 gelagerten Förderschnecke 3 auf, die über eine Aufgabeöffnung 4 im Schneckengehäuse 2 mit Brennstoff beschickt wird. Der Antrieb der kernlosen Förderschnecke 3 erfolgt über einen Getriebemotor 5, der durch eine Kupplung 6 mit einem Wellenstummel 7 der Förderschnecke 3 antriebsverbunden ist. Am austragsseitigen Ende 8 des Schneckengehäuses 2 ist eine Austragsöffnung 9 vorgesehen. Außerdem ist das austragsseitige Ende 8 des Schneckenförderers 1 mit einer Brennstoffschleuse 10 verbunden, die sich im Wesentlichen aus einem zylindrischen Schleusengehäuse 11 mit einem Brennstoffauslass 12 (in Fig. 1 nicht sichtbar) und aus einem Zellenrad 13 zusammensetzt. Die Anordnung ist dabei so getroffen, dass das Schleusengehäuse 11 das austragsseitige Ende 8 des Schneckengehäuses 2 koaxial umschließt, um das Zellenrad 13 im Ringraum zwischen dem Schneckengehäuse 2 und dem Schleusengehäuse 11 aufzunehmen. Das Zellenrad 13 selbst besteht aus zwei Stirnwänden 14 und 15, zwischen denen Trennwände 16 angeordnet sind, die sich zwischen dem Schneckengehäuse 2 und dem Schleusengehäuse 11 erstrecken und das Zellenrad 13 in einzelne je eine Schleusenkammer bildende Zellen unterteilen. Während die eine Stirnwand 15 des Zellenrades 13 eine den Ringraum zwischen dem Schneckengehäuse 2 und dem Schleusengehäuse 11 axial begrenzende Ringscheibe bildet, stützt sich die andere Stirnwand 14 des über das Austragsende des Schneckengehäuses 2 vorstehenden Zellenrades 13 am Wellenstummel 7 ab, der das Schneckengehäuse 2 axial durchsetzt. Das Schneckengehäuse 2 ist in einem Durchtritt 18 des Schleusengehäuses 11 abgestützt, das auf der gegenüberliegenden Stirnseite ein Lager 19 für den Wellenstummel 7 und damit die Förderschnecke 3 aufnimmt.

Der über die Förderschnecke 3 im Schneckengehäuse 2 der Austragsöffnung 9 zugeförderte Brennstoff fällt durch die Austragsöffnung 9 in die jeweils an der Austragsöffnung 9 vorbeigedrehten Zellen des Zellenrades 13, das ja mit der Förderschnecke 3 mitgedreht wird. Die einerseits durch die Trennwände 16 und anderseits durch das Schneckengehäuse 2 und das Schleusengehäuse 11 begrenzten Zellen des Zellenrades 13 fördern die jeweils aufgenommene Brennstoffmenge zum Brennstoffauslass des Schleusengehäuses 11. Dort wird der Brennstoff ausgetragen und beispielsweise durch eine weiterführende Förderschnecke einer Feuerung zugeführt.

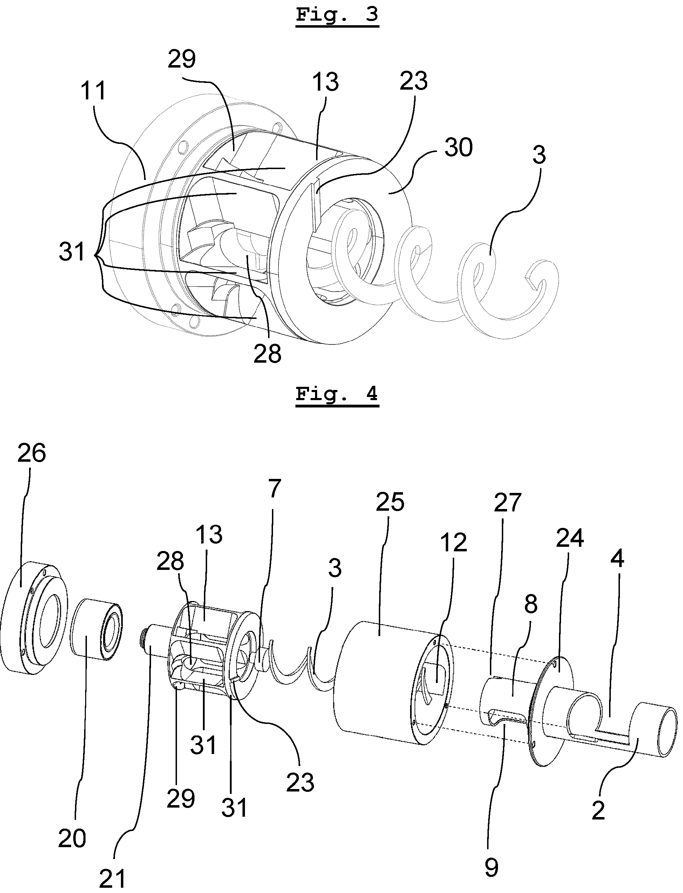

Die Fig. 2-5 zeigen alle dieselbe bevorzugte Variante der gegenständlichen Erfindung. Die Bezugszeichen werden soweit möglich wie zu Fig. 1 verwendet. Die bevorzugte Ausführungsvariante umfasst so wie der Stand der Technik einen Schneckenförderer 1 und eine Brennstoffschleuse 10. Der Aufbau dieser Komponenten unterscheidet sich jedoch vom Stand der Technik. Der Schneckenförderer 1 weist ein Schneckengehäuse 2 auf, welches eingangsseitige eine Aufgabeöffnung 4 aufweist und am austragsseitigem Ende 8 eine Austragsöffnung 9. Anders als beim Stand der Technik ist das rohrförmige Schneckengehäuse 2 aber in Richtung der Zellradschleuse offen. Das offene Ende des Schneckengehäuses 2 ist in einer Vertiefung 28 des Zellenrads 13 mit Spiel aufgenommen und mit seiner freien Stirnseite gegen den Boden dieser Vertiefung 28 gerichtet. Wie am besten in Fig. 4 erkennbar ist, ist das Schneckengehäuse 2 bevorzugt fest mit einer ersten Scheibe 24 des Schleusengehäuses 11 verbunden, insbesondere verklebt oder verschweißt. Die erste Scheibe 24 weist eine zentrale Öffnung auf, durch welche das Schneckengehäuse 2 verläuft. Die erste Scheibe 24 ist bevorzugt ringförmig ausgeführt.

Bevorzugt weist das Schneckengehäuse 2 an seinem freien Ende oben eine Aussparung 27 auf, insbesondere eine V-förmige Aussparung, welche zur freien Stirnseite des Schneckengehäuses 2 hin offen ist. Dadurch kann Staub, der sich im vorderen Bereich des Schneckenblattes nach der Austragsöffnung 9 anlagern kann, durch die Aussparung 27 entweichen. Durch den vorderen Bereich der Förderspirale wird der Staub nach oben gedrückt und gelangt durch die Aussparung 27 in die Kammern des Zellrades.

Die Austragsöffnung 9 liegt an der Unterseite des Schneckengehäuses 2 vor, bevorzugt mit Abstand zum freien Ende des Schneckengehäuses 2.

Die Förderschnecke 3 der bevorzugten Variante weist einen kurzen Wellenstummel 7 auf, welcher in ein Öffnung 22 des Zellenrades 13 ragt, welche Öffnung 22 in einem Wellenfortsatz 21 des Zellenrades 13 liegt. Die Öffnung 22 und der in die Öffnung 22 eingesetzte Wellenstummel 7 liegen axial zum Wellenfortsatz 21 vor.

Der Wellenstummel 7 ist derart am Zellenrad 13 befestigt, dass die Drehbewegung des Zellenrades 13 auf den Wellenstummel 7 und somit auf die Förderschnecke 3 übertragen wird. Die Förderschnecke 3 ist bevorzugt, bis auf den Wellenstummel 7, seelenlos ausgeführt. Die Wendel besteht bevorzugt aus Stahl und ist ausreichend steif, dass diese nicht in Kontakt mit dem Schneckengehäuse 2 ist (Das freie Ende der Wendel liegt nicht am Schneckengehäuse 2 an).

Der Wellenstummel 7 kann in das Zellenrad 13 eingepresst oder eingeschraubt sein. Alternativ oder zusätzlich kann der Wellenstummel 7 mit dem Zellenrad 13 verklebt oder verschweißt sein.

Der Wellenstummel 7 ist jedenfalls im Betrieb drehfest am Zellenrad 13 befestigt.

Die Förderschnecke 3 ist anders als beim Stand der Technik nicht im Schneckengehäuse 2 gelagert, sondern liegt kontaktlos in diesem vor.

Das Schleusengehäuse 11 weist bevorzugt eine erste Scheibe 24 und eine zweite Scheibe 26 auf, zwischen welchen sich ein Hohlzylinder 25 befindet. Bevorzugt weisen die Scheiben 24 und 26 jeweils einen inneren Aufpressbereich für den Hohlzylinder 25 auf. Der Hohlzylinder 25 liegt mit seiner inneren Mantelfläche an den Aufpressbereichen an. Die äußeren Mantelflächen der Scheiben 24 und 26 und des Hohlzylinders 25 können bündig vorliegen. Bevorzugt verlaufen zur Befestigung der drei Teile des Schleusengehäuses 11 aneinander Schrauben durch Öffnungen der beiden Scheiben 24, 26 in den Mantel des Hohlzylinders 25. Der Hohlzylinder 25 weist den Brennstoffauslass 12 auf, wie in Fig. 4 erkennbar ist. Der Brennstoffauslass 12 liegt versetzt zur Austragsöffnung 9 vor.

Anders als beim Stand der Technik ist das Zellenrad 13 bevorzugt ein monolithisches Teil, also aus einem Stück Material gefertigt, insbesondere durch Zerspanen. Anders als beim Stand der Technik ist das Zellenrad 13 axial geschlossen und weist einen Wellenfortsatz 21 auf. Der Wellenfortsatz 21 ragt durch das Schleusengehäuse 11, insbesondere durch die zweite Scheibe 26 des Schleusengehäuse 11. Die zweite Scheibe 26 weist somit eine zentrale Öffnung auf, durch welche der Wellenfortsatz 21 verläuft.

Das durch das Schleusengehäuse 11 ragende Ende des Wellenfortsatzes 21 kann auf bekannte Weise mit einem Antrieb, beispielsweise einen Getriebemotor 5, gekoppelt werden.

Das monolithische Zellenrad 13 umfasst bevorzugt den Wellenfortsatz 21, an welchen ein erster breiterer scheibenförmiger Bereich 29 anschließt, von welchem sich mehrere radial verteilte Elemente 31 zu einem zweiten scheibenförmigen Bereich 30 erstrecken, wobei der erste scheibenförmiger Bereich 29 axial geschlossen ist und der zweite scheibenförmigen Bereich 30 axial offen ist, um einen Durchtritt für das Schneckengehäuse 2 zu bilden. Die mehreren radial verteilten Elemente 31 liegen bevorzugt als Flügel des Zellenrades 13 vor. Die Flügel werden bei der Fertigung bevorzugt aus einem zylindrischen oder hohlzylindrischen Bereich eines Rohlings herausgefräst.

Die Lagerung des Wellenfortsatzes 21 im Schleusengehäuse 11 erfolgt bevorzugt durch ein zweireihiges Lager 20, bevorzugt ein zweireihiges Schrägkugellager, bevorzugt mit geteiltem Innenring.

Die Lagerung und das Zellenrad 13 sind ausreichend stabil, damit das Zellenrad 13 nicht am Schleusengehäuse 11 aufliegt.

Um ein Ablagern von Staub zwischen einem der scheibenförmigen Bereiche 29, 30 des Zellenrads 13 und einer der Scheiben 24, 26 des Schleusengehäuses 11 zu verhindern, ist an zumindest einem der scheibenförmigen Bereiche 29, 30 des Zellenrads 13 ein Abstreifelement 23 vorgesehen. Bevorzugt ist am zweiten scheibenförmigen Bereich 30, welcher axial offen ist, außen ein Abstreifelement 23 vorgesehen, welches sich über die gesamte Breite des ringförmigen freien Endes des zweiten scheibenförmigen Bereichs 30 erstreckt. Das Abstreifelement 23 ist bevorzugt ein monolithischer Bestandteil des Zellenrads 13 und kann durch spanabhebende Bearbeitung aus dem Rohling des Zellenrads 13 geformt werden. Das Abstreifelement 23 kann aber auch ein zusätzliches Element sein, welches mit dem Zellenrad 13 verpresst, verschraubt, verklebt oder verschweißt ist, oder in eine Nut des Zellenrads 13 eingesetzt ist.

Zusätzlich oder alternativ kann sich ein eben beschriebenes Abstreifelement 23 auch am ersten scheibenförmigen Bereich 29 des Zellenrads 13 befinden.

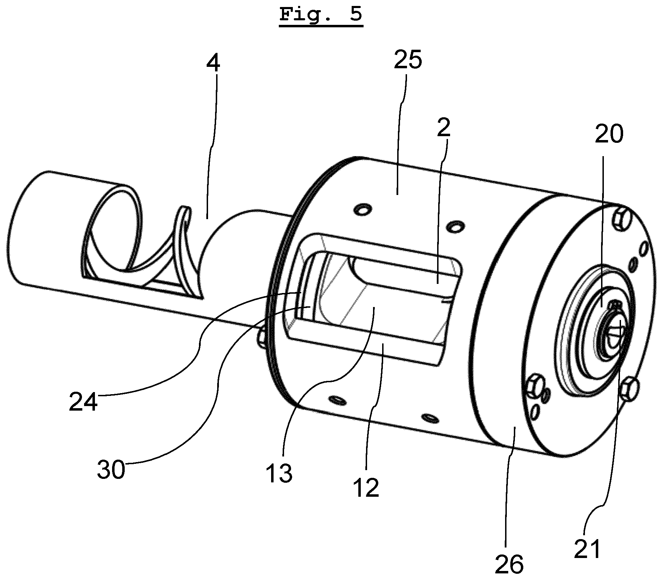

Der Brennstoffauslass 12 erstreckt sich bevorzugt bis hinter den zweiten scheibenförmigen Bereich 30 des Zellenrads 13, also bis in jenen Bereich, in welchem bevorzugt das Abstreifelement 23 vorliegt, wie in Fig. 5 sichtbar ist. Anders formuliert erstreckt sich der Brennstoffauslass 12 bevorzugt bis zu jenem Bereich, welcher zwischen dem zweiten scheibenförmigen Bereich 30 des Zellenrades 13 und der ersten Scheibe 24 des Schleusengehäuses 11 vorliegt. Der Abstand des Brennstoffauslasses 12 zum einen Ende des Hohlzylinders 25 ist bevorzugt gleich lang wie die Breite des Aufpressbereichs der ersten Scheibe 24.

Der Abstand des Brennstoffauslass 12 zum anderen Ende des Hohlzylinders 25 ist bevorzugt gleich lang wie die Breite des Aufpressbereichs der zweiten Scheibe 26. Der Brennstoffauslass 12 kann sich somit zusätzlich oder alternativ bevorzugt bis hinter den ersten scheibenförmigen Bereich 29 des Zellenrads 13 erstrecken, wobei auch in diesem Bereich ein Abstreifelement 23 vorliegen kann. Anders formuliert erstreckt sich der Brennstoffauslass 12 bevorzugt bis zu jenem Bereich, welcher zwischen dem ersten scheibenförmigen Bereich 29 des Zellenrades 13 und der zweiten Scheibe 26 des Schleusengehäuses 11 vorliegt.

## Patentansprüche

1. Vorrichtung zum Fördern von stückigem Brennstoff mit einer in einem Schneckengehäuse (2) angeordneten Förderschnecke (3) und mit einer an eine Austragsöffnung (9) im Bereich des austragsseitigen Endes (8) des Schneckengehäuses (2) angeschlossenen Brennstoffschleuse (10), die aus einem Schleusengehäuse (11) und aus einem im Schleusengehäuse (11) angeordneten Zellenrad (13) besteht, wobei das Zellenrad (13) einen ersten scheibenförmigen Bereich (29) aufweist der axial geschlossen ist und von welchem sich mehrere radial verteilte Elemente (31) in axialer Richtung zu einem zweiten scheibenförmigen Bereich (30) erstrecken, wobei der zweite scheibenförmige Bereich (30) axial offen ist, um einen Durchtritt für das Schneckengehäuse (2) zu bilden, wobei das Zellenrad (13) einen Wellenfortsatz (21) aufweist, welcher durch das Schleusengehäuse (11) ragt und in diesem gelagert ist, wobei die Förderschnecke (3) drehfest am Zellenrad (13) befestigt ist.

2. Vorrichtung nach Anspruch 1, **dadurch gekennzeichnet, dass** die mehreren radial verteilten Elemente (31) durch spanende Bearbeitung aus einem zylindrischen oder hohlzylindrischen Rohling geschnitten wurden.

3. Vorrichtung nach einem der Ansprüche 1 bis 2, **dadurch gekennzeichnet, dass** das Schneckengehäuse (2) eine rohrförmige offene Stirnseite aufweist, welche dem ersten scheibenförmigen Bereich (29) zugewandt liegt.

4. Vorrichtung nach Anspruch 3, **dadurch gekennzeichnet, dass** im ersten scheibenförmigen Bereich (29) eine Vertiefung (28) vorliegt, in welche das rohrförmige offene Ende des Schneckengehäuses (2) ragt.

5. Vorrichtung nach einem der Ansprüche 1 bis 4, **dadurch gekennzeichnet, dass** an der freien Stirnseite des zweiten scheibenförmigen Bereichs (30) ein Abstreifelement (23) vorliegt, welches sich über die gesamte Breite des ringförmigen freien Endes des zweiten scheibenförmigen Bereichs (30) des Zellenrads (13) erstreckt.

6. Vorrichtung nach einem der Ansprüche 1 bis 5, **dadurch gekennzeichnet, dass** das Schleusengehäuse (11) einen Brennstoffauslass (12) aufweist, welcher sich bis hinter den zweiten scheibenförmigen Bereich (30) des Zellenrads (13) erstreckt.

7. Vorrichtung nach einem der Ansprüche 1 bis 6, **dadurch gekennzeichnet, dass** das Schneckengehäuse (2) an seinem freien Ende, welches innerhalb des Zellenrades (13) liegt, eine Aussparung (27) aufweist, welche zusätzlich zur Austragsöffnung (9) des Schneckengehäuses (2) vorliegt, wobei die Aussparung (27) in Längsrichtung versetzt zur Austragsöffnung (9) liegt und zwar näher am freien Ende des Schneckengehäuses (2).

8. Vorrichtung nach einem der Ansprüche 1 bis 7, **dadurch gekennzeichnet, dass** das Schleusengehäuse (11) eine erste Scheibe (24) und eine zweite Scheibe (26) aufweist, zwischen welchen sich ein Hohlzylinder (25) befindet, wobei das Schneckengehäuse (2) durch eine zentrale Öffnung der ersten Scheibe (24) in das Innere der Brennstoffschleuse (10) ragt.

9. Vorrichtung nach Anspruch 8, **dadurch gekennzeichnet, dass** Schneckengehäuse (2) fest mit der ersten Scheibe (24) des Schleusengehäuses (11) verbunden ist, insbesondere verklebt oder verschweißt ist.

10. Vorrichtung nach einem der Ansprüche 8 bis 9, **dadurch gekennzeichnet, dass** sich der Brennstoffauslass (12) bis zu einem Bereich erstreckt, welcher zwischen dem zweiten scheibenförmigen Bereich (30) des Zellenrades (13) und der ersten Scheibe (24) des Schleusengehäuses (11) vorliegt.

11. Vorrichtung nach einem der Ansprüche 8 bis 10, **dadurch gekennzeichnet, dass** sich der Brennstoffauslass (12) bis zu einem Bereich erstreckt, welcher zwischen dem ersten scheibenförmigen Bereich (29) des Zellenrades (13) und der zweiten Scheibe (26) des Schleusengehäuses (11) vorliegt.

## Claims

1. A device for conveying particulate fuel comprising a screw conveyor (3) arranged within a screw housing (2) and a fuel lock (10) arranged at an output opening (9) in the area of the output-side end (8) of the screw housing (2), which fuel lock (10) consists of a lock housing (11) and a celled wheel (13) arranged within the lock housing (11), wherein the celled wheel (13) has a first discoid region (29), which is axially closed and from which multiple, radially dispersed elements (31) extend in an axial direction towards a second discoid region (30), wherein the second discoid region (30) is axially open to form a passage for the screw housing (2), wherein the celled wheel (13) has an undulate extension (21) which protrudes through and is supported in the lock housing (11), wherein the screw conveyor (3) is non-rotationally attached to the celled wheel (13).

2. The device of claim 1, **characterised in that** the multiple radially dispersed elements (31) have been shape-cut from a cylindrical or hollow-cylindrical slug.

3. The device of any one of claims 1 and 2, **characterised in that** the screw housing (2) has a tubular, open end face, which faces the first discoid region (29).

4. The device of claim 3, **characterised in that** an indentation (28), into which the tubular, open end of the screw housing (2) protrudes, is present within the first discoid region (29).

5. The device of any one of claims 1 to 4, **characterised in that** a strip-off element (23) is present on the free end face of the second discoid region (30), which element extends over the entire width of the annular free end of the second discoid region (30) of the celled wheel (13).

6. The device of any one of claims 1 to 5, **characterised in that** the lock housing (11) has a fuel outlet (12), which extends all the way behind the second discoid region (30) of the celled wheel (13).

7. The device of any one of claims 1 to 6, **characterised in that** the screw housing (2) has on its free end within the celled wheel (13) a recess (27), which is present in addition to the output opening (9) of the screw housing (2), wherein the recess (27) is offset from the output opening (9) in a longitudinal direction so as to be closer to the free end of the screw housing (2).

8. The device of any one of claims 1 to 7, **characterised in that** the lock housing (11) has a first disc (24) and a second disc (26) with a hollow cylinder (25) in between, wherein the screw housing (2) protrudes into the interior of the fuel lock (10) through a central opening of the first disc (24).

9. The device of claim 8, **characterised in that** the screw housing (2) is firmly connected, in particular bonded or welded, to the first disc (24) of the lock housing (11).

10. The device of any one of claims 8 and 9, **characterised in that** the fuel outlet (12) extends up to a region between the second discoid region (30) of the celled wheel (13) and the first disc (24) of the lock housing (11).

11. The device of any one of claims 8 to 10, **characterised in that** the fuel outlet (12) extends up to a region between the first discoid region (29) of the celled wheel (13) and the second disc (26) of the lock housing (11).

## Revendications

1. Dispositif pour le transport de combustible en morceaux avec une vis transporteuse (3) disposée dans un boîtier de vis (2) et avec une écluse de combustible (10) reliée à une ouverture d'évacuation (9) dans la zone de l'extrémité (8) côté sortie du boîtier de vis (2), ladite écluse étant constituée d'un boîtier d'écluse (11) et d'une roue cellulaire (13) disposée dans le boîtier d'écluse (11),
la roue cellulaire (13) comprenant une première partie en forme de disque (29) qui est fermée axialement et à partir de laquelle une pluralité d'éléments (31) répartis radialement s'étendent dans la direction axiale jusqu'à une deuxième partie en forme de disque (30), la deuxième partie en forme de disque étant ouvert axialement pour former un passage à travers le boîtier de vis (2), la roue cellulaire (13) présentant un prolongement d'arbre (21) qui s'étend à travers le boîtier d'écluse (11) et qui est logé dans celui-ci, la vis transporteuse (3) étant fixée à la roue cellulaire (13) sans pouvoir tourner.

2. Dispositif selon la revendication 1, **caractérisé en ce que** la pluralité d'éléments (31) répartis radialement ont été découpés par usinage d'une ébauche cylindrique ou cylindrique creuse.

3. Dispositif selon l'une des revendications 1 à 2, **caractérisé en ce que** le boîtier de vis (2) présente une face frontale ouverte tubulaire qui fait face à la première partie en forme de disque (29).

4. Dispositif selon la revendication 3, **caractérisé en ce qu'**il y a un creux (28) dans la première partie en forme de disque (29) dans lequel l'extrémité ouverte tubulaire du boîtier de vis (2) fait saillie.

5. Dispositif selon l'une des revendications 1 à 4, **caractérisé en ce qu'**un élément racleur (23) est présent sur la face frontale libre de la deuxième partie en forme de disque (30) et s'étend sur toute la largeur de l'extrémité libre annulaire de la deuxième partie en forme de disque (30) de la roue cellulaire (13).

6. Dispositif selon l'une des revendications 1 à 5, **caractérisé en ce que** le boîtier d'écluse (11) présente une sortie de combustible (12) qui s'étend jusqu'au-delà de la deuxième partie en forme de disque (30) de la roue cellulaire (13).

7. Dispositif selon l'une des revendications 1 à 6, **caractérisé en ce que** le boîtier de vis (2) présente, à son extrémité libre située dans la roue cellulaire (13), un évidement (27) qui est présent en plus de l'ouverture d'évacuation (9) du boîtier de vis (2), l'évidement (27) étant décalé dans une direction longitudinale par rapport à l'ouverture d'évacuation (9) et est plus proche de l'extrémité libre du boîtier de vis (2).

8. Dispositif selon l'une des revendications 1 à 7, **caractérisé en ce que** le boîtier d'écluse (11) comprend un premier disque (24) et un deuxième disque (26) entre lesquels se trouve un cylindre creux (25), le boîtier de vis (2) faisant saillie à l'intérieur de l'écluse de combustible (10) à travers d'une ouverture centrale du premier disque (24).

9. Dispositif selon la revendication 8, **caractérisé en ce que** le boîtier de vis (2) est relié solidement, en particulier collé ou soudé, au premier disque (24) du boîtier d'écluse (11).

10. Dispositif selon l'une des revendications 8 à 9, **caractérisé en ce que** la sortie de combustible (12) s'étend jusqu'à une zone entre la deuxième partie en forme de disque (30) de la roue cellulaire (13) et le premier disque (24) du boîtier d'écluse (11).

11. Dispositif selon l'une des revendications 8 à 10, **caractérisé en ce que** la sortie de combustible (12) s'étend jusqu'à une zone entre la première partie en forme de disque (29) de la roue cellulaire (13) et le deuxième disque (26) du boîtier d'écluse (11).
